# EUROPEAN PATENT SPECIFICATION

(11) **EP 0 940 959 B1**
(45) Date of publication and mention of the grant of the patent: **10.10.2007**
(21) Application number: 98103838.3
(22) Date of filing: 04.03.1998
(51) Int. Cl.: H04L 29/06, G06F 17/30

(54) **Establishing connections between remote devices with a hypertext transfer protocol**
Verbindungsherstellung zwischen entfernten Einheiten mit Hypertext-Übertragungsprotokoll
Etablissement de connexions à distance entre dispositifs avec protocole Hypertext

(43) Date of publication of application: 08.09.1999
(73) Proprietor: Sony Deutschland GmbH, 10785 Berlin (DE)
(72) Inventor: Veltman, Markus, Stuttgarter Strasse 106 70736 Fellbach (DE); Buchner, Peter, Stuttgarter Strasse 106 70736 Fellbach (DE)
(74) Representative: Müller, Frithjof E.

(56) References cited:
- WO-A-97/18636
- WO-A-97/26725
- DE-A- 19 704 694
- WICKELGREN I J: "THE FACTS ABOUT FIREWIRE" IEEE SPECTRUM, vol. 34, no. 4, April 1997, pages 19-25, XP002051393
- HURA G S: "The Internet: global information superhighway for the future" COMPUTER COMMUNICATIONS, vol. 20, no. 16, January 1998, page 1412-1430 XP004113222

## Description

The present invention relates to a method for establishing a connection between remotely controllable devices, in particular a guaranteed bandwidth connection, and also to remotely controllable devices and a control device adapted therefore.

In the following the remotely controllable devices will be identified just as remote devices.

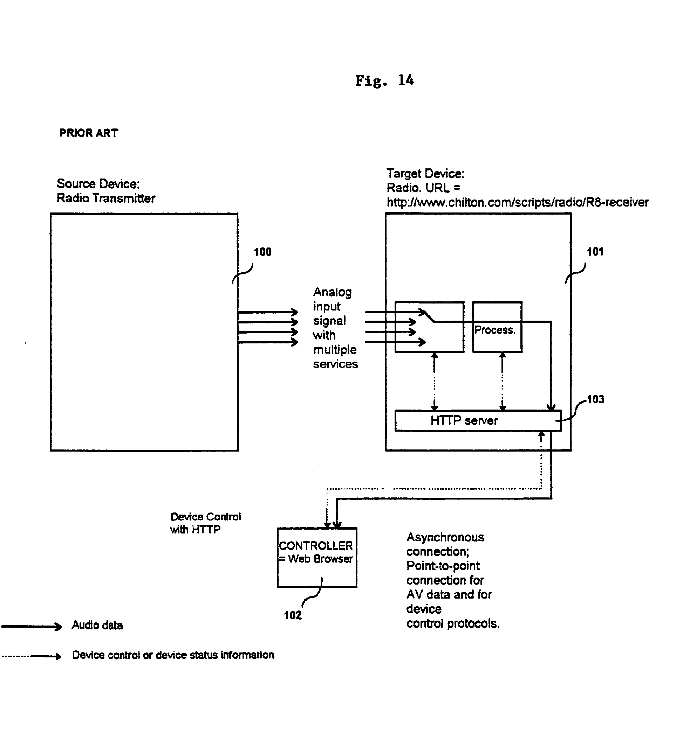

A method for controlling a remote device with HTTP is known from the internet. Certain internet sites demonstrate how to control an audio-video-device (AV-device), such as an audio tuner or a television receiver to switch to different channels so as to broadcast different selectable information to and via the Internet. An example of such a system is shown in Figure 14. Here, it is shown how to control a radio with HTTP. A radio transmitter 100 as source device inputs an analog signal with multiple services to a target device, here a server 101 offering a universal resource locator, e. g. http//www.chilton.com/scripts/radio/R8-receiver. The server 101 includes a micro-controller and HTTP server 103 offering the possibility to select one of the multiple services received from the radio transmitter 100 via the internet and to output it to the internet. In this case HTTP is used as transfer protocol. The micro-controller and HTTP server 103 offers a graphical user interface to any internet user selecting the universal resource locator of the server 101. An internet user needs a controller 102, like a Web Browser to establish an asynchronous connection to the server 101. This asynchronous point-to-point connection is established for audio data and for the HTTP control protocol.

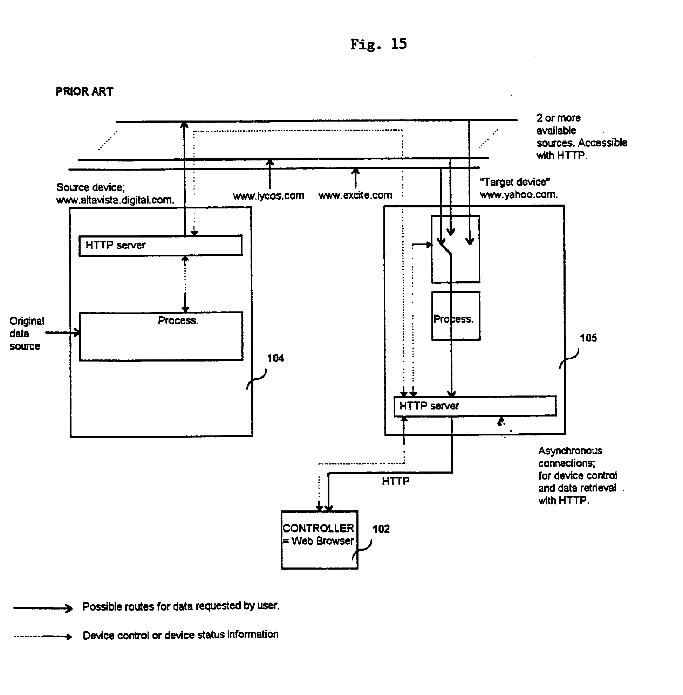

It is also known from the internet to establish a connection between two remote devices, i. e. between two HTTP servers. An example of such a connection is shown in Figure 15. An internet user can connect to a target device 105 that is a HTTP server with a search engine function. The connection to the target device 105 is an asynchronous connection for the control of the target device 105 and the data retrieval from the target device to the controller 102 (i. e. Web Browser) of the internet user. If the HTTP server 105 cannot provide the requested data itself. There is the possibility that this target device can establish a second asynchronous connection to another HTTP server 104 also serving as a search engine. Such a connection between these two remote servers 104 and 105 is not directly controlled by the internet user, but is self-established by the target device selected by the internet user. In the shown example, the internet user connects with his Web Browser 102 to the target device Yahoo with the universal resource locator "www.Yahoo.com" and the target device Yahoo establish an asynchronous connection to a source device Altavista with the universal resource locator "www.Altavista.digital.com".

In both shown examples not only the control data, but also audio data or retrieval data is transported on a conventional TCP/IP (Transmission Control Protocol/Internet Protocol) connection which does not offer guaranteed bandwidth. Therefore, after the control of the target device using e. g. HTTP, also the requested information is transmitted to the internet user via his/her Web Browser 102 using HTTP. This implies sometimes long waiting times, since an HTTP connection can not reserve guaranteed bandwidth.

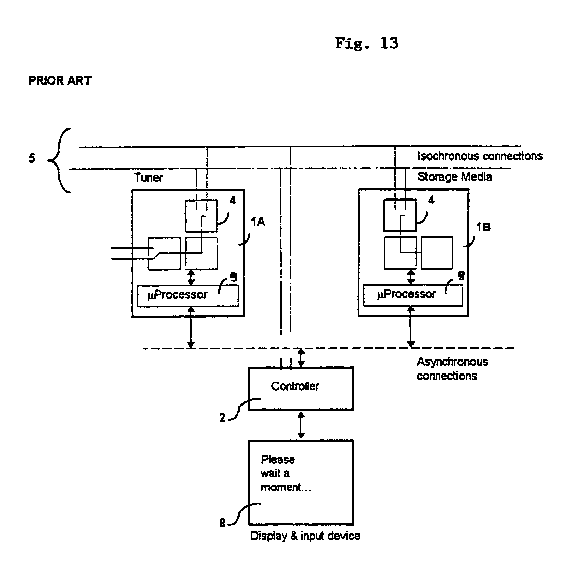

On the other hand, network environments are known that require interoperability between audio/video sources and target devices having transport mechanisms e. g. defined in IEEE 1394 that is used to enable communication between attached devices with guaranteed bandwidth. Such a network environment is shown in Figure 13. IEEE 1394 specifies "isochronous" channels which offer guaranteed bandwidth between attached source and target devices. Additionally there are "asynchronous" channels which offer point-to-point connections for system specific control protocols. Here, various system specific protocols are specified e. g. for digital VCRs, DVB tuners, DAB tuners, etc., to enable control of the corresponding devices of various types. In Figure 13 two of such remote devices 1 are shown. One is a tuner device type 1A and the other is a storage media device type 1B. Both devices 1 have a logical interface 4 connected to the isochronous channels of the IEEE 1394 network. Both devices 1 comprise a micro-processor 9 used to control these devices 1. Both devices 1 also have a logical interface 6 connected to a controller 2 via an asynchronous channel of the IEEE 1394 network. Such a multifunctional controller 2, i. e. a system capable of controlling all attached remote devices 1, needs to support all system specific protocols and has therefore a relatively complicated structure. Furthermore, adding an additional device type requires in general a corresponding upgrade of the controller 2, since every remote device 1 of a different type or make needs a system specific control protocol to be sent via the asynchronous channel.

As mentioned, each remote device type connected to an IEEE 1394 network system requires a specific control protocol. Consequently, to enable a user to control said type of devices the implementation of controller 2 becomes complicated, since all relevant protocols have to be known. It is difficult that controllers are feasible for controlling all systems, since so called dedicated controllers are used that are intended for one system type. A further difficulty lies in the fact that the respective system specific protocol is relatively rigid as it is intended to enable control of low level device functions. Consequently, in case of upgrading a remote device 1 in the IEEE 1394 network, often an associated upgrade of the controller 2 is also necessary, since the existing protocol needs to be extended. Also, adding a new remote device type to the IEEE 1394 network will be a problem, since the controller 2 has either to support a new system specific protocol or the new remote device 1 has to support one of the system specific protocols already known by the controller 2. Furthermore, as the system specific protocols are relatively rigid, a controller manufacturer can easily design the user interface in such a way that it conceals any look-and-feel of the controlled remote device 1. This could discourage certain equipment manufacturers from supporting IEEE 1394 networks. The latter may also lead to increased support for non-compatible network protocols which would result in even more interoperability problems.

A device control with HTTP as it is now available in internet solves the problems mentioned above. But in this case no directly controllable connection in-between two remote devices 1 is established and any requested data, e. g. audio and video data, is transported over a connection that does not guarantee adequate bandwidth so that in case of congested network connections a discontinous data flow is the result, such as a discontinous audio/video playback. Also most Web authors miss the chance to educate the users by displaying a graph of the data flow.

Document DE 197 04 694 A1 discloses to control a remote device using HTTP. Document W097/ 18636 discloses to remotely control a control device using HTTP.

Therefore, it is the object of the present invention to offer a simple method and a control device for establishing a connection between remote devices, e. g. network devices.

According to the present invention, a method for establishing first connections between remote devices by independently controlling the remote devices using a hypertext transfer protocol is provided, wherein second connections used for controlling the remote devices are operated independently from the first connections.

Preferably the remote devices are controlled via a control device, wherein said control device controls said remote devices using a hypertext transfer protocol. Said control device can either be remotely controlled also using a hypertext transfer protocol or directly controlled via a user interface included in the control device.

Further preferrably said connection between remote devices is a guaranteed bandwith connection.

According to the invention, instead of using several system specific protocols, a hypertext transfer protocol, i.e. HTTP, is used to orchestrate interaction between multiple remote devices. Each device operates like an internet server and can present a menu of options that correspond with a certain control function. The set up of a controller becomes a lot easier, since only one control protocol has to be supported by the controller. In case of upgrading the network system by adding an additional remote device type, it is not necessary to include a new control protocol into the controller. This can preferably be done by downloading a user interface from each of said remote devices that should be controlled by the controller into the controller and offering said user interfaces to a user who wants to control said remote devices.

Further preferred embodiments of the inventive method defined in claim 1 are defined in dependent claims 2 to 12.

A remote device according to the present invention capable of establishing a first connection to other remote devices comprises a control interface via which the remote device is controllable over a second connection using a hypertext transfer protocol, wherein the second connection is usable for remotely initiating the establishing of the first connection, wherein the remote device is adapted to independently operate the first and second connection.

Preferrably said control interface stores a user interface that can be a graphical user interface. With such a user interface the remote device according to the present invention effectively acts like a HTTP server. In this case the user interface that is stored in the control interface is downloaded from said remote device to a control device when the remote device is accessed by a user via a control device. Then, all functionalities of the remote device are accessable via the controller used by the user.

Further preferred embodiments of a remote device according to the invention as defined in independent claim 13 are specified in dependent claims 14 to 22.

As can be taken from the above explanation, any Web Browser that is able to connect to more than one or more HTTP server(s) can serve as a controller to control the devices according to the present invention. However, when considering home network environments like the IEEE 1394 network system, it is desirable that every device can be directly accessed by a controller when the user wants to control the home network from outside. Therefore, a control device according to the present invention with a first interface to control remote devices using a hypertext transfer protocol is characterized by a second interface to control said control device using a hypertext transfer protocol to establish a connection between at least two of said remote devices.

Such a control device according to the present invention is defined in independent claim 23. Dependent claims 24 to 28 specify preferred embodiments thereof.

Networks built up with remote devices according to the present invention and a control device according to the present invention that work according to the inventive method improve the user-friendliness by offering more interesting user interfaces, since each device can present its own unique user interface e. g. in an HTML frame, and enables an easy upgrade of the network system, since there has to be no special controller for each remote device type (that is working like a server). Furthermore, in a preferred embodiment audio and video data are only transported over a connection that guarantees adequate bandwidth, whereas the control commands can be transmitted either over a guaranteed bandwidth connection or over an asynchronous connection.

Other objects, advantages and features of the present invention will be better understood from the following detailed description of preferred embodiments thereof taken in conjunction with the accompanying drawings, wherein:
- **Figure 1**: shows an IEEE 1394 network configuration according to the present invention;

- **Figure 2**: shows an IP address assignment in a system according to figure 1;
- **Figure 3**: shows an example of the initialization procedure of the home net DNS server;
- **Figure 4**: shows an example of the DNS server reply to an external request;
- **Figure 5**: shows an example of a HTTP server initialization in a system according to figure 1;
- **Figure 6**: shows an example how the system according to the invention reacts on a first user command;
- **Figure 7**: shows an automatic conversion to a newly proposed URL convention with "server redirect" response according to the invention;
- **Figure 8**: shows an example of the first menu from the server according to the present invention;
- **Figure 9**: shows a process of changing the isochronous source for a storage device according to the present invention;
- **Figure 10**: shows an example of the new storage device state after the process shown in Figure 9, and the switching to another remote device according to a user action;
- **Figure 11**: shows the logical connections of an extended network;
- **Figure 12**: shows the physical connections of the network environment according to the invention;
- **Figure 13**: shows a conventional IEEE 1394 network configuration;
- **Figure 14**: shows the controlling of a radio with HTTP in the internet according to the prior art, and
- **Figure 15**: shows the conventional automatic connection between two remote devices in the internet.

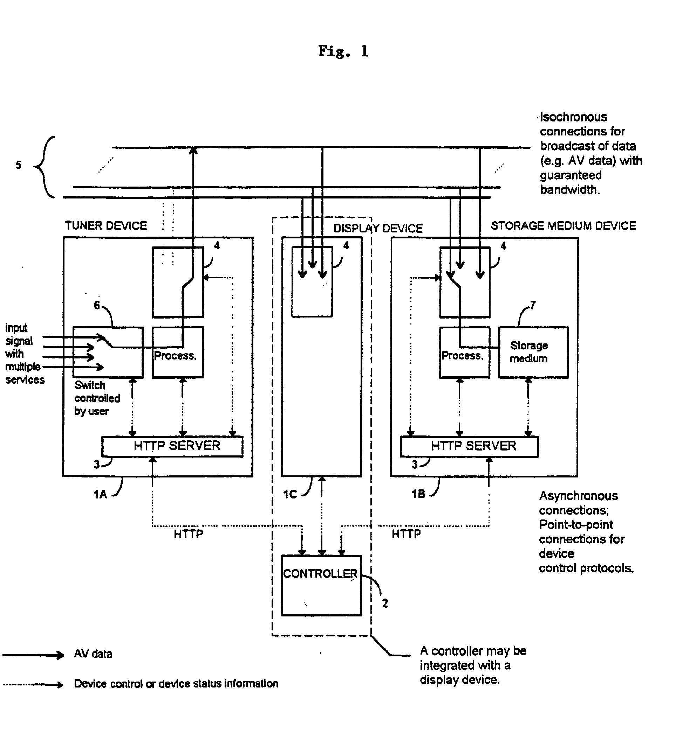

Figure 1 shows an IEEE 1394 network configuration according to the present invention. Three remote devices 1A, 1B, 1C of different types are respectively connected to isochronous connections for the broadcast of data, e. g. audio/video data that offer guaranteed bandwidth via a data interface 4 included in each of said remote devices 1A, 1B, 1C. Such isochronous connections could e. g. be established via an IEEE 1394 bus system. It is also possible that other than garanteed bandwith connections, e.g. asynchronous connections, are used. On the other hand, the remote devices 1A, 1B, 1C respectively comprise a control interface, i.e. a hypertext transfer protocol server 3 via which each of said remote devices 1A, 1B, 1C establishes an asynchronous connection to a controller 2. Said hypertext transfer protocol server 3 comprises at least a microcontroller and a memory. Such an asynchronous connection is a point-to-point connection for device control protocols. In the case shown, according to the present invention a hypertext transfer protocol, e. g. HTTP, is used as device control protocol. The HTTP server 3 that includes microcontroller and memory in each of said remote devices serves as gateway for controlling the respective remote device 1A, 1B, 1C, e. g. for controlling the respective logical interface 4 and the respective processing of the remote device 1A, 1B, 1C.

In figure 1, a tuner device 1A as source device is shown that comprises a switch 6 for selecting amongst one of several services of an input signal with multiple services. The HTTP server 3 of the tuner device 1A controls the processing within the tuner device 1A and the data interface 4 of the tuner device 1A according to a preset algorithm, the switch 6 can be controlled by a user via the controller 2 and the HTTP server 3 of the tuner device 1A. Furthermore, a storage medium device 1B is shown, wherein the storage medium 7 itself and the processing within the storage medium device 1B is controlled by the HTTP server 3 according to a present algorithm and the selection to begin and end the storage or playback of the data of a certain connected isochronous connection is performed by a user via the controller 2 and the HTTP server 3 of the storage medium device 1B.

In the shown example also a remote display device 1C is connected to the isochronous connections 5 and to the controller 2. This remote display device 1C is connected to the controller 2 via an asynchronous connection. It can be controlled with the same protocol, i. e. HTTP, and with the same controller 2 as the remote storage media device 1B, but the data of the selected isochronous connection is displayed instead of being stored. As it is indicated in figure 1 by broken lines, such a display device can be integrated with the controller 2. In this case, the "connection" within such a device needs not necessarily to be an asynchronous connection and the display needs not necessarily to be controlled using a hypertext transfer protocol.

The controller 2 can be accessed by a user to control each of the remote devices 1A, 1B, 1C connected thereto. Apart from the selection which isochronous channel is to be used by a device to broadcast data via a guaranteed bandwidth connection, which is selected by the system itself in dependence of currently available capacities, the user can fully control each of the remote devices 1A, 1B, 1C. In the shown example the user can select which of the multiple services input into the remote tuner device 1A, should be processed and broadcasted to an isochronous connection by controlling the switch 6. The remote storage medium device 1B is controlled by the user to select one of the connected isochronous connections, the incoming data of which should be processed and recorded on the storage medium 7.

According to the invention, there is no need for a different controller 2 for each of said remote devices or a controller 2 that is specially adapted to all of the remote devices connected to the system, since the remote devices 1A, 1B, 1C are respectively and independently controlled using the same protocol, i. e. a hypertext transfer protocol, e. g. HTTP. The controller can be a relatively low cost device which only supports asynchronous connections. By using HTTP instead of control protocols specially designed for each of the remote devices 1, the controller effectively functions as a Web Browser. To enable the use of existing Browsers, the same protocols are used as are now used in the internet, i. e. IP, TCP and HTTP.

In Figure 1 the isochronous and asynchronous connections are displayed separately, but in real systems both types of connections are supported in the same cable, as it is the case in the IEEE 1394 system. In IEEE 1394 a method is specified to support IP on top of IEEE 1394 connections, consequently it can also support TCP and HTTP connections. It is also thinkable that a naming system such as DNS (Domain Name System) enables the assignment of domain-names to remote devices and that other protocols will be implemented to improve the plug and play behavior, e. g. for automatic assignment of IP addresses, net masks or DNS name servers. DHCP (Dynamic Host Configuration Protocol) or a similar protocol can serve to do this.

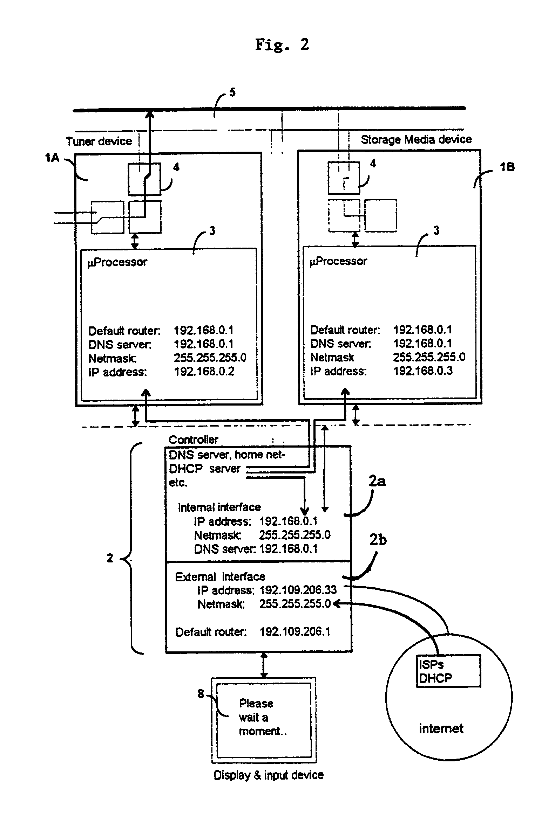

Figure 2 shows an example of conventional IP address assignment to the remote devices 1A, 1B and controller interfaces 2a and 2b to support the invention.

The IEEE 1394 bus system is currently being used to connect consumer audio/video devices. However, according to the present invention, it is possible to:
① Connect such remote devices to internet servers, e. g. for software upgrades.
② Besides using the controller 2 to control and view conventional 1394 services, the user can use the same controller 2 to select and access internet services.
③ Connections to the internet can also be necessary for other reasons, e. g. travelling customers may require access to their remote home network devices through the internet.

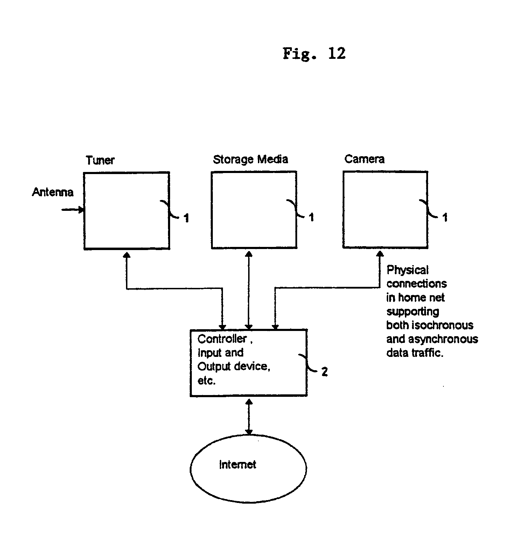

Parts of the following initialization procedure have been designed to accommodate such features. In the following example, it is assumed that the controller 2 is a PC or a PC-like device that could function as a gateway to the internet as shown in Figure 12. The connection to the internet can be supported, e. g. by a telephone modem or a cable modem. The following sections describe each step of the boot procedure after a conventional network initialization has been described.

Figure 13 shows the conventional IEEE 1394 network initialization. Two remote devices, e. g. a tuner device 1A and a storage media device 1B, are connected to isochronous connections 5 of the IEEE 1394 network via a respective logical internal data interface 4. Furtheron, they are respectively connected to a controller 2 via a logical interface and an asynchronous connection of the IEEE 1394 network. The controller 2 needs to be adapted to the tuner device 1A and the storage media device 1B, since each remote device type has a different set of control commands. The controller 2 has access to a remote display and input device or such a device is integrated within the controller 2 as display and input device 8 as described above.

The conventional IEEE 1394 network initialization is performed after power-on or (re)initialization. Here, all devices attached to the network will attempt to boot to their preferred state. One of the steps to accomplish this is e. g. the identification of certain master devices such as an isochronous resource manager and the allocation of node_ids to enable the setting up of IEEE 1394 asynchronous connections. This procedure is described in the IEEE 1394 specification. After providing this transport layer, the devices will contact other devices to obtain more information about their capabilities and to determine the network topology etc. Such information will be stored in each device to support basic communications. Furthermore, additional information may be stored locally to enable advertising capabilities to the user at a later stage.

According to the present invention, the first step of the boot procedure is the conventional network initialization as described above for IEEE 1394. After such an IEEE 1394 transport layer has been established, the IP (Internet Protocol) network initialization can be started. To support plug and play as much as possible, the automatic assignment of parameters, such as IP addresses and IP netmasks, is required. Devices, which need access through a router, e. g. to make connections to remote internet sites, will also need to know the default router IP address. For automatic assignment of such parameters in addition to the basic IP protocol family, it is useful to use a protocol such as DHCP. In simple IEEE 1394 networks, it is possible to avoid using a protocol like DHCP, if some kind of standardized IP address assignment convention is available. E. g. IP addresses can be derived from the IEEE 1394 worldwide unique ID. This makes it possible to guarantee locally unique IP addresses. Also, the name server and router can adopt standardized IP addresses to enable fixed name server and default router entries in each IP device. Devices that have multiple roles can assign multiple IP addresses to their interfaces if necessary.

In the example shown in figure 2, the remote tuner device 1A has the following addresses assigned to its HTTP server 3:
- Default router:: 192.168.0.1
- DNS server:: 192.168.0.1
- Net mask:: 255.255.255.0
- IP address:: 192.168.0.2

Whereas the remote storage media device 1B, has the following addresses assigned to its HTTP server 3:
- Default router:: 192.168.0.1
- DNS server:: 192.168.0.1
- Net mask:: 255.255.255.0
- IP address:: 192.168.0.3.
and the controller 2 that also serves as a gateway to the internet and has access to a display and input device 8 comprises two interfaces, an internal interface 2a for the DNS server and home net DHCP server with the following addresses:
- IP address:: 192.168.0.1
- Net mask:: 255.255.255.0
- DNS server:: 192.168.0.1,
and an external interface 2b for the communication with the internet having the following addresses:
- IP address:: 192.109.206.33
- Net mask:: 255.255.255.0
- Default router:: 192.109.206.1

These addresses could either be fixed addresses according to a future standard to make the system more simple, but they can also be assigned during the IP network initialization e. g. with DHCP.

For the external connection to the internet a lower layer, such as PPP (Point to Point Protocol) or a telephone line, will be required to support the IP traffic. This part of the network initialization process is a standard and will not be described here.

In case a DHCP protocol is used it will depend on the requirements which device will function as a DHCP server. If the IP stack is only required to support HTTP control with web browsers, the IP stack is necessary if at least one HTTP server and at least one HTTP client are connected to the network. It is expected that in typical home networks the total number of source and target devices will be larger than the total number of controllers.

Assuming that the network has one controller 2 that is acting as an HTTP client, and several remote source and target devices 1; 1A, 1B each acting as an HTTP server, the controller 2 would be involved in all HTTP sessions for all remote devices 1. Therefore, to limit the dependency on other remote devices, it would be appropriate to locate the DHCP server on the controller 2.

However, if IP is also required for other purposes, e. g. as a transport means to download new control software from internet to non-controller devices 1; 1A, 1B and if the controller 2 is not the gateway to the internet, it may be preferrable to support the DHCP server on a non-controller device.

To support IP traffic with the internet, appropriate routing and address values are required in the home network. Considering that a large number of home networks with an even larger number of devices is expected, it would not be feasible to use registered internet addresses within the home network, as these are already a scarce resource. Therefore, for this purpose a special range of "private" addresses should be used (e. g. 192.168.0.0 to 192.168.255.255) which have been provided by the IETF (Internet Engineering Task Force). These addresses do not exist in the internet and consequently they can be used and re-used by private networks. In figure 2 a network address in this range, i. e. 192.168.0.0, is used by the DHCP server. In addition to assigning locally unique addresses, the DHCP server also assigns a 3 byte netmask, IP addresses of the default router, i. e. 192.168.0.1, and name server, i. e. 192.168.0.1, to each home net device 1; 1A, 1B.

As the controller 2 functions as a gateway to the internet, it needs a special IP configuration. The controller comprises an additional IP interface 2b with an internet registered address, which enables the device to communicate with external internet sites, in the shown case, the IP address 192.109.206.33. For this purpose, the controller 2 needs a different default router address that should refer to a router in the internet. The value of such parameters depends on which ISP (Internet Service Provider) gateway is used. Just as the DHCP server of the home network assigns such parameters to devices 1A, 1B inside the home network, also the ISP could use a DHCP server to assign appropriate IP parameters to the home networks external interface 2b. In figure 2, the ISP's DHCP server assigned the address 192.109.206.33 to the external interface 2b of the controller 2. Furthermore, the ISP instructed the home net gateway to use 193.109.206.1 as its default router.

After the IP configuration, the home network gateway will translate any internal IP address to the external IP address for outgoing IP packets and vice versa for incoming packets.

As alternative to identify devices 1; 1A, 1B and the controller 2 only with addresses, the association of names with devices 1; 1A, 1B or the controller 2 might be feasible. As in internet, there are four reasons why the addressing with names is desireable in addition to the addressing with IP addresses:
- To improve the user friendliness each device should also have an appropriate name associated with it. This enables users to address devices with names that could be typed or even spoken instead of numbers.
- IP addresses should be concealed from the Web Browser because they may change due to dynamic assignment of such adresses.
- Furthermore, even if such addresses were fixed, if a nomadic controller would bookmark such IP addresses, it would not be able to use this bookmark from an external network, because the internet does not support such private numbers. In other words, the IP addresses of the local home network are only valid within the home network environment. A nomadic controller in this case is a portable device which can be moved from a home network to a remote internet connection or vice versa. To support the IP addresses of the local home network, the portable device would need to know the home networks external IP address or addresses. Also this address may be assigned dynamical by the internet service provider and therefore it should not be stored as a bookmark.
- In systems where multiple devices offering the same kind of service are included, it is sometimes desireable to use the same server name but to map this name to different IP addresses. The main intent of this approach is usually to distribute the load of multiple clients on more than one server.

To cope with these situations, the home net uses a DNS, i. e. a Domain Name System, where "name servers" are used to translate names to the appropriate IP address. Systems that wish to contact a device with its name first contact a name server. The latter replies with the appropriate IP address, which enables further communication.

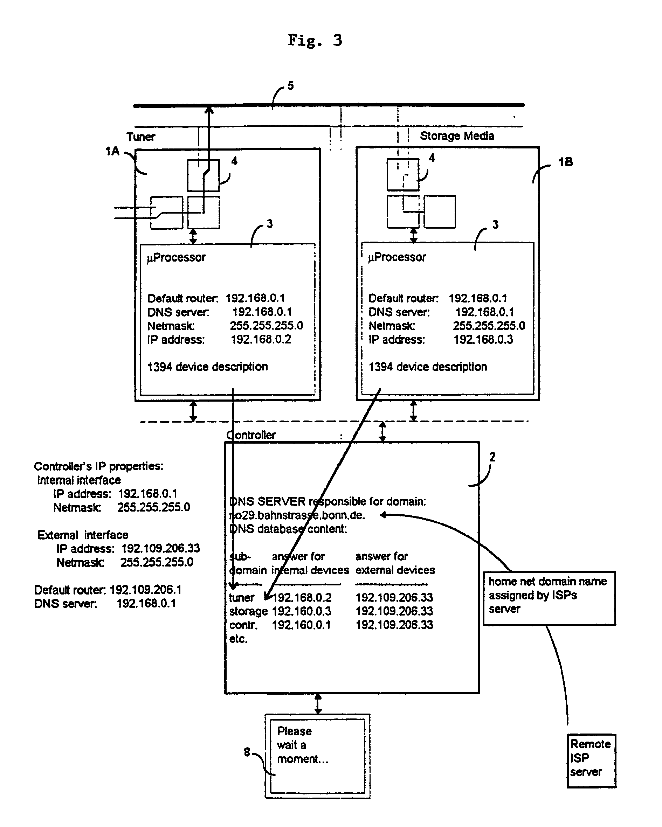

A home network according to the invention using a DNS is shown in Figure 3. The difference in-between figures 3 and 2 lies not only in the controller 2 that now additionally serves as DNS server in this case, but also the respective microcontrollers 3 of the remote devices have an additional entry, namely a device description, e. g. a 1394 device description, indicating the kind of the device, e. g. tuner, storage, controller, etc.. [Note: Figure 2 shows the state after IP initialization. The next step is DNS initialization, as shown in figure 3.]

Additionally to the content of the controller 2 shown in Figure 2, the controller 2 shown in Figure 3 comprises of a
DNS server responsible for domain: no29.bahnstrasse.bonn.de. and a DNS database with the following content:

| subdomain | answer for internal devices | answer for external devices |
|---|---|---|
| tuner | 192.168.0.2 | 192.109.206.33 |
| storage | 192.160.0.3 | 192.109.206.33 |
| controller | 192.160.0.1 | 192.109.206.33 |

wherein also additional devices would have an entry with their names assigned to two addresses.

If a system in the internet would need to access the remote home network, it would need to communicate with the internet service provider connected to the remote home network. Assuming this home network is located e. g. in Bonn, the internet service provider could for example assign a name with reflects the location of the home network, such as: "no29.bahnstrasse.bonn.de" as in the shown example.

With the domain name (no29...) from the internet service provider, the home net server within the controller 2 can assign unique names to each of its home net devices 1; 1A, 1B, these names are fully qualified domain names. Assuming that the IEEE 1394 specification already has a convention for device names, the home net DNS server could extract such a device name as specified by the IEEE 1394 standard and then prepend this name to the home net domain. For example, if a device was called "storage" in the IEEE 1394 home network, the DNS server could use this as a subdomain identifier for the respective device, i. e. "storage.no29.bahnstrasse.bonn.de". Alternatively to such an automatic assignment of the fully qualified domain name, a manual assignment can be performed by an operator of the remote home network.

With all this data, i. e. the device description as specified by the IEEE 1394 network, the IP addresses assigned by the home net DHCP server, the IP address for the gateway's external interface assigned by the internet service provider and the home net domain assigned by the internet service provider, the home net DNS server inside the controller 2 can build a database as shown above and in figure 3. During such an initialization procedure, the controller 2 can display a message, such as "Please wait a moment..." on the display and input device 8 connected thereto.

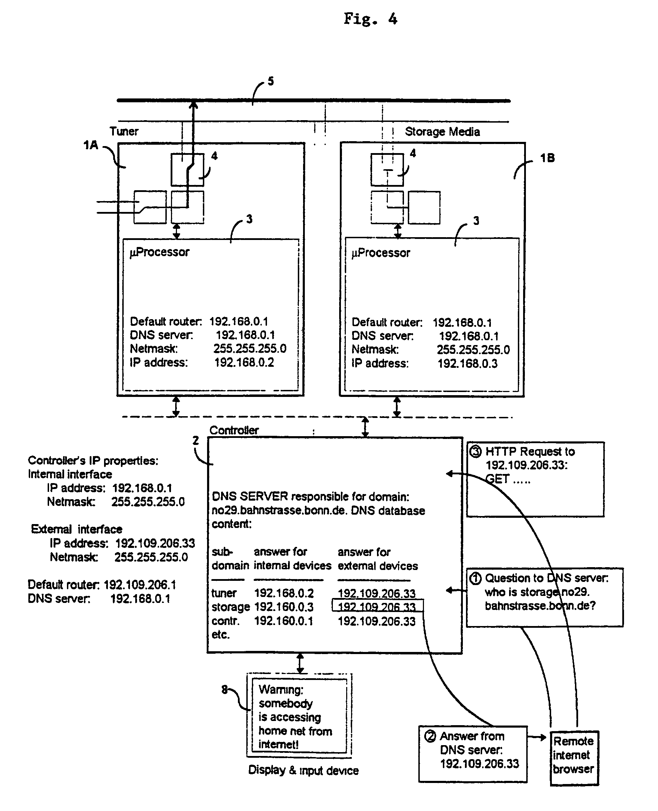

The DNS server has to prepare two possible IP addresses for each device connected to the network. The entries depicted in the second column, i. e. private IP addresses, are used if an internal device requests a name translation. The value in the third column, i. e. internet IP address, is used when replying to requests from external systems, because private addresses cannot be used in the internet. It is also possible that the internet service provider take care of all no29.bahnstrasse.donn.de-name translation requests from external systems. In any case external systems can only reach the home network gateway and not the respective devices 1; 1A, 1B within the home network, as it is shown in figure 4.

Figure 4 shows the system shown in figure 3 and the procedure of an internet device to access the storage media device 1B of the home network. The internet device first sends a query to the DNS server of the home network: "Who is storage.no29.bahnstrasse.bonn.de?" and gets in a second step the IP address of the external interface of the controller 2 as an answer from the DNS server, here: "192.109.206.33", in other words, not the IP address of the storage media device 1B is given to the device requesting the IP address of "storage.no29.bahnstrasse.bonn.de", but only the IP address of the external interface 2b of the controller 2. In this case a warning can be displayed on the display and input device 8 that somebody is accessing the home network from the internet. If necessary an authentication and/or authorization procedure is included during the session setup. Whoever sends a request through the internet can now access the storage media device 1B via the controller 2 in a third step, but not directly.

As a work around for this problem, according to the present invention, a new universal resource identifier (URI) convention is defined that supports HTTP access from the internet to home network devices 1; 1A, 1B through the home network gateway, i. e. the controller 2.

The complete domain name is obviously necessary to access a remote ISP subdomain from an internet site, however, within the home network environment it would be difficult to use such a long name for each device. To avoid this, as in current IP networks, client devices within the home network could assume a default domain. In the above described example an appropriate default domain name would be "no29.bahnstrasse.bonn.de".

By mapping a name to multiple IP addresses also resource management with DNS is possible. As home networks have various devices which can only support one user or one task, it is possible that the network may have several of such devices. In this case, an intelligent name server is able to map a generic device name, e. g. "dvbtuner.no29.bonn.de", to the IP address of a free device. To enable addressing of specific devices, unique names can also be assigned.

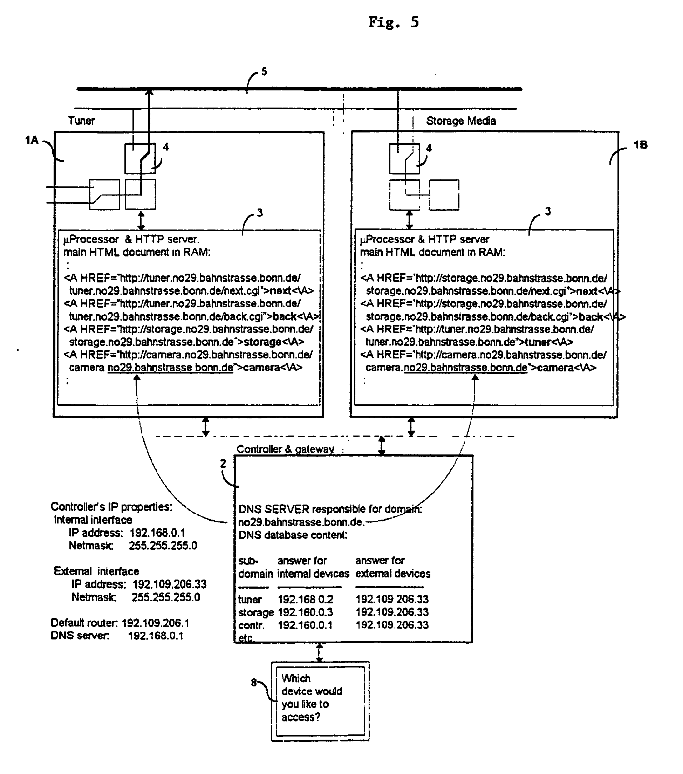

In the following, the controlling of the home network devices 1; 1A, 1B shown before with HTTP will be explained with reference to figures 5 to 10.

In most conventional HTTP applications servers are addressed with a universal resource locator (URL) that consists of a server domain name, i. e. the fully qualified domain name, followed by a path which refers to an HTML document on that server. With this approach the main menu of e. g. a DVB tuner would be called "http://dvbtuner.no29.bahnstrasse.bonn.de/index.html". With this URL, browsers inside the home network would first look up the IP address for "dvbtuner.no29.bahnstrasse.bonn.de". The DNS server would then reply with the internal IP address and consequently the browser would send the HTTP get command: "GET/index.html" to this IP address. Browsers in internet would also lookup this domain, but they would receive the gateway's external IP address as it is shown in Figure 4.

To enable the access from internet systems through the home net gateway in the controller 2, it is secured that
- the gateway will be able to receive HTTP requests and can forward these requests to home network devices 1; 1A, 1B,
- furthermore, the gateway can find the destination device in the home network, since the domain name is copied to the path, e. g.: "http://dvbtuner.no29.bahnsstrasse.bonn.de/dvbtuner.no29.bahnstrasse.bonn.de/index.html".

With this new URL convention, according to the present invention, the audio video devices initialize their HTTP servers 3 as it is shown in Figure 5. For a remote tuner device 1A according to the invention, a main HTML document is stored in the memory of the HTTP server 3. This main HTML document could for example be:
<A HREF="http://tuner.no29.bahnstrasse.bonn.de/tuner.no29.bahnstrasse.bonn.de/next.cgi">**next**<\A>
<A HREF="http://tuner.no29.bahnstrasse.bonn.de/tuner.no29.bahnstrasse.bonn.de/back.cgi">**back**<\A>
<A HREF="http://storage.no29.bahnstrasse.bonn.de/storage.no29.bahnstrasse.bonn.de">**storage**<\A>
<A HREF="http://camera.no29.bahnstrasse.bonn.de/camera.no29.bahnstrasse.bonn.de">**camera**<\A>.

The main HTML document in the memory of the HTTP server 3 included in the remote storage media device 1B according to the present invention could for example look like:
<A HREF="http://storage.no29.bahnstrasse.bonn.de/storage.no29.bahnstrasse.bonn.de/next.cgi">**neat**<\A>
<A HREF="http://storage.no29.bahnstrasse.bonn.de/storage.no29.bahnstrasse.bonn.de/back.cgi">**back**<\A>
<A HREF="http://tuner.no29.bahnstrasse.bonn.de/tuner.no29.bahnstrasse.bonn.de">**tuner**<\A>
<A HREF="http://camera.no29.bahnstrasse.bonn.de/camera.no29.bahnstrasse.bonn.de">**camera**<\A>.

It is possible for each HTTP server to find the local domain name by performing an inverse DNS lookup. This means, every HTTP server can determine its domain name by asking the local DNS server to translate its IP address, Alternativly, the name server can use a preferrably standardized generic local domain name, e. g. "home net", if the home network has never been connected to the internet.

Every server will compile HTML documents which describe:
- Its current services; e. g. in case of a tuner this refers to the broadcast signal, which it receives as its input; to describe such signals the tuner will convert MPEG data and/or associated DVB SI (Digital Video Broadcasting Service Information) data to HTML data; e. g. in case of a storage device in recording mode this refers to the input signals such as audio/video data on isochronous channels; besides the textual description of the services as shown in Figure 5, preferrably also the audio video data will be presented in the HTML menu. To support moving pictures, the commands "server push" or "client pull" can be used to update the picture regurlarly;
- service selection operations, such as "next" service and previous, i. e. "back", service if this exists; each server device will associate appropriate scripts or programms with such entries;
- furthermore, each server can provide links to other devices on the home network; to determine the latter, the server could poll other devices, e. g. at port 80, as this is the default IP port for HTTP traffic, and make an associated entry if that device responds; alternatively each server could snoop (= capture IP packets) to determine which other servers are active.

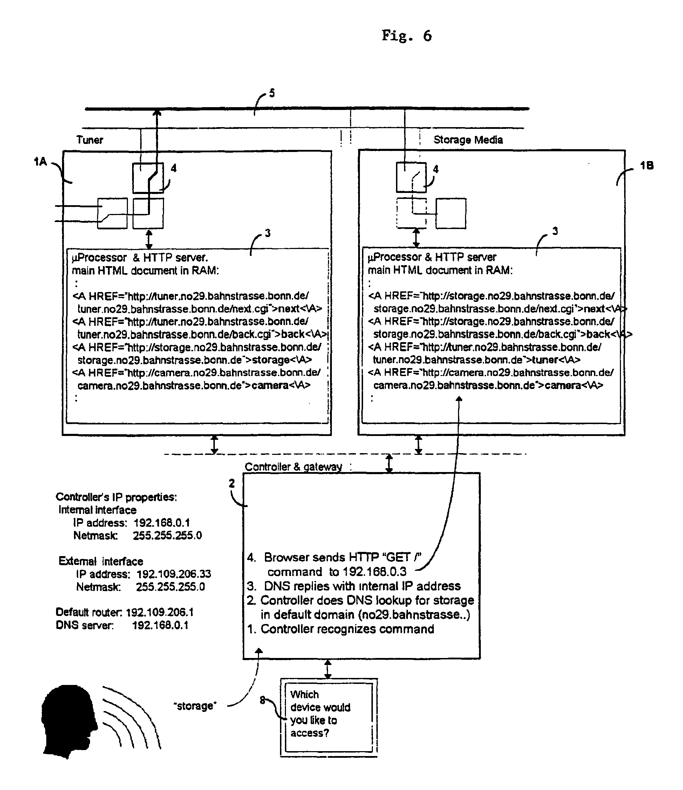

As it is shown in figures 5 and 6, after initialization of the HTTP servers 1; 1A, 1B and the controller 2, the display and input device 8 connected to the controller 2 displays a message "Which device would you like to access?" to a user. If a user types in or utters a command, e. g. "storage", as it is shown in Figure 6, the controller 2 has first to recognize this command. If a successful recognition has been conducted, a second step of the controller is to perform a DNS lookup for the input command, here "storage", in the default domain, here "no29.bahnstrasse...". In a third step, the DNS server replies with the internal IP address, e. g. 192.168.0.3 for the remote storage media device 1B. The browser included in the controller 2 then sends in a fourth step the HTTP command "GET/" to the internal IP address of the wanted device, here to the address 192.168.0.3.

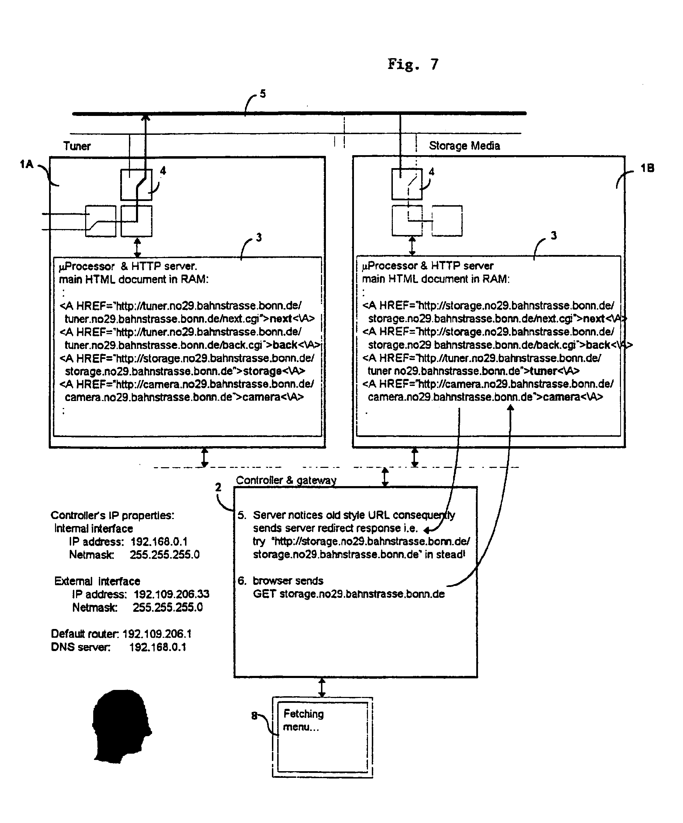

Figure 7 shows the response of the HTTP server with the address 192.168.0.3, here the remote storage media device 1B, to this universal resource locator not sent in the new URL convention. In a fifth step the server, i. e. the storage media device 1B, notices this old style URL and consequently sends a server redirect response, i. e.
try "http://storage.no.29.bahnstrasse.bonn.de/
storage.no.29.bahnstrasse.bonn.de" instead!

The browser complies with the redirect response and sends in a sixth step the new URL "GET storage.no29.bahnstrasse.bonn.de". During such an automatic conversion and during the waiting time caused by the asynchronous connection the display and input device 8 connected to the controller 2 shows the message:
"Fetching menu...".

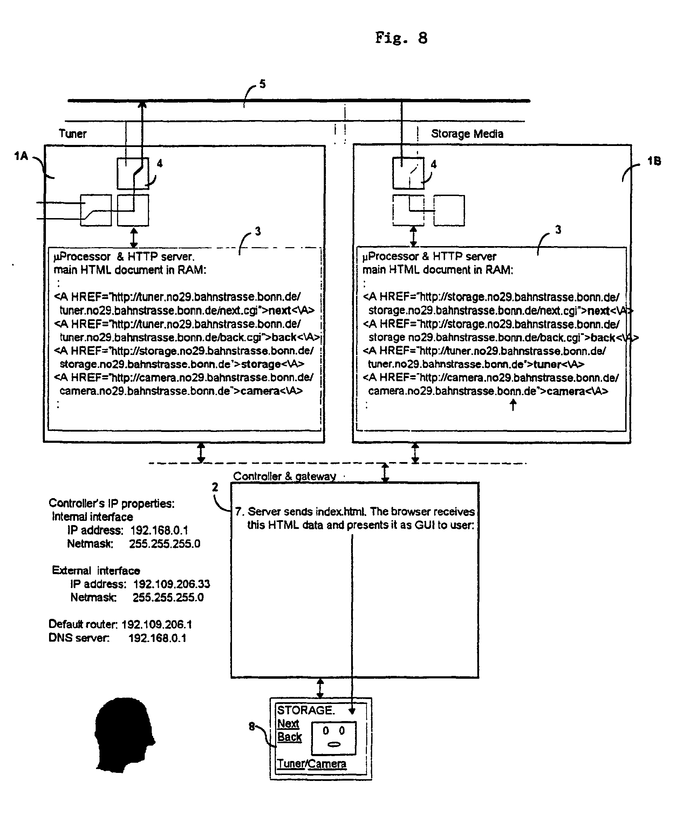

In figure 8 it is shown that in a seventh step the server 3 of the storage media device 1B sends an HTML page "index.html". The Browser receives this HTML data and presents it as graphical user interface (GUI) to the user on the display and input device 8, which displays e. g. the name of the remote storage media device 1B "STORAGE" and the available commands, e. g. next, back, tuner/camera and a picture taken by a not shown camera which is the selected input device of the remote storage media device 1B at the moment.

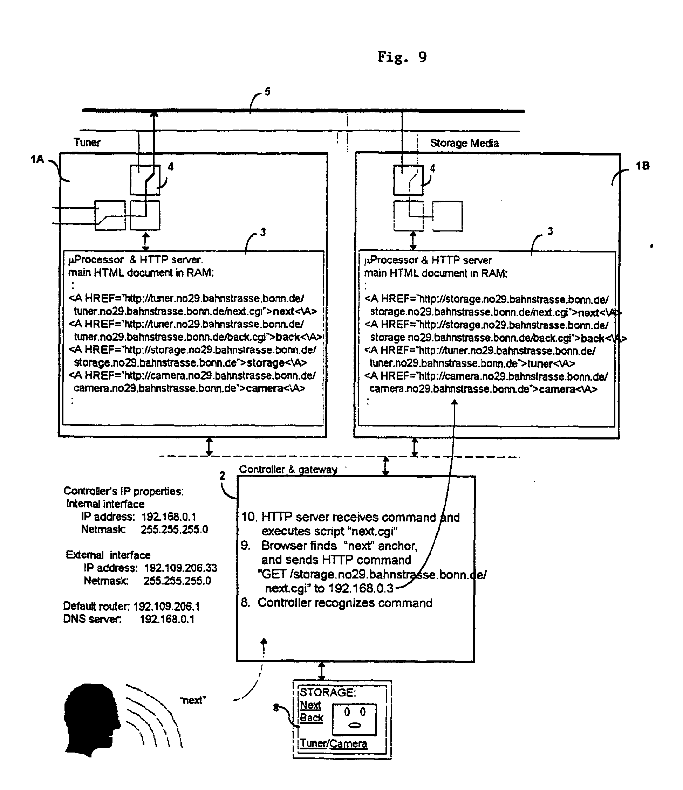

With the first menu from the selected remote storage media device 1B, the user notices in this case that this device is currently connected to a camera. As the user might wish to record from the tuner instead of the camera, he requests the next service, as it is shown in figure 9, with uttering the word "next". In an eigth step the controller 2 recognizes this command, the Browser finds in the following step 9 the "next" anchor and sends the HTTP command "GET/storage.no29.bahnstrasse.bonn.de/next.cgi" to the IP address 192.168.0.3 of the remote storage media device 1B. In the tenth step the HTTP server 3 of the remote storage media device 1B receives this command and executes the script "next.cgi". Therefore, the storage media device 1B selects a new isochronous channel and presents a new menu.

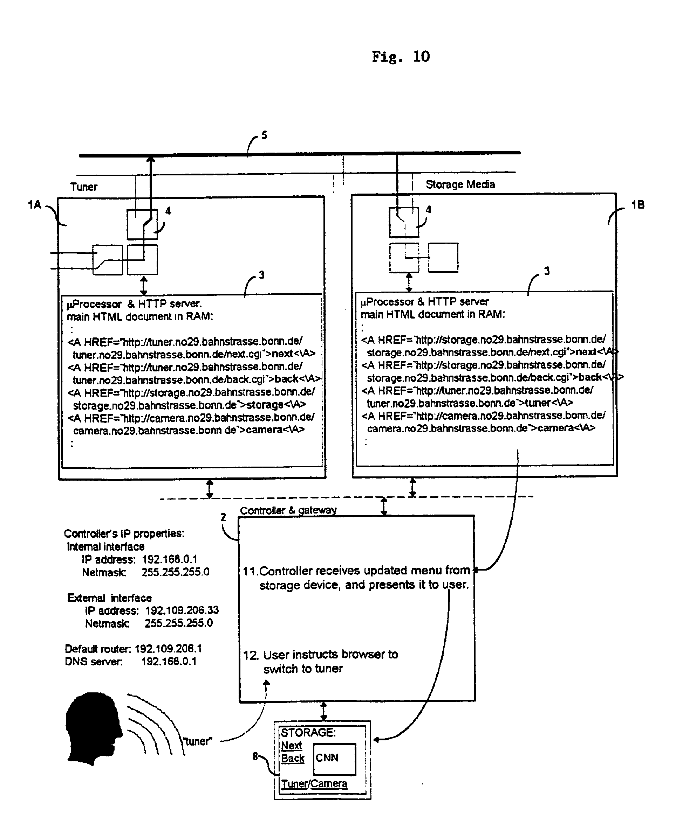

In figure 10 it is shown that in a eleventh step the controller 2 receives the updated menu from the remote storage media device 1B and presents it to the user on the display and input device 8 connected thereto. The new menu now includes the data received on the isochronous channel that connects the remote tuner device 1A with the remote storage media device 1B, in this case the picture of CNN.

As the user has put the remote storage media device 1B in the desired state, he can now switch to the remote tuner device 1A with the "tuner" command, to select a desired channel.

To make these commands less ambiguous and to indicate e. g. that the last line of the menu will connect the Browser with a different audio/video device more details and graphics are required and can be included on the respective HTML page.

Again the browser will try to find an anchor, associated with the command "tuner". It will then follow the HREF field in that anchor. Consequently it will perform a DNS lookup for "tuner.no29.bahnstrasse.bonn.de" and send the HTTP command "GET/tuner.no29.bahnstrasse.bonn.de" to the appropriate IP address. The latter will return the menu associated with that path, which will include information on currently selected services. Also this menu has "next" and "back" entries, but these will perform operations that are different from the next and back operations of the storage media device 1B. For example, the tuner's "next" operation may change the tuner's frequency while the tuner output remains on the same isochronous channel number.

According to another embodiment of the present invention it is also possible that the menus of all or certain selected remote devices connected to the controller 2 are displayed at the same time on the display input device 8 connected to the controller 2.

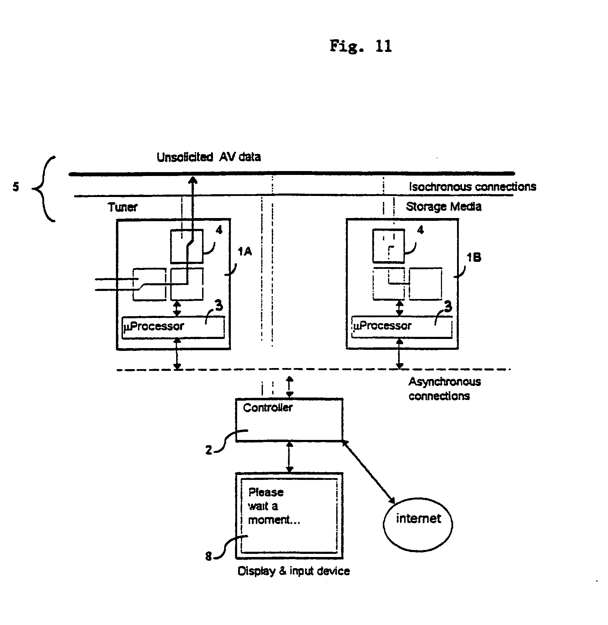

To enable an easier set-up of isochronous channels, Figure 11 shows the principles of an extended network initialization, the unsolicited audio video data broadcasting, that is explained in the following again using the IEEE 1394 network system.

In conventional IEEE 1394 applications, like e. g. a digital video cassette application, the controller interacts with the user and then, depending on the user's input, controls both source and target devices at almost the same time. Therefore, to large extend, conventional controllers are able to conceal the network topology from the user. One of the disadvantages of this approach is that, in the worst case, a newly purchased source or target device will have limited or no influence in the graphical user interface of the controller. Consequently, the upgrade would appear to have limited or no effect. According to this invention, device manufacturers can develop devices with their own graphical user interface that allows the user to control each device directly. The intend is that the user orchestrates interaction between devices by successively controlling source and destination devices as described in the examples above.

To improve the user friendliness it is desireable to avoid constraining the order of controlling the remote devices. In other words, the user should have the freedom to choose which source/remote device to control first. For this purpose, according to the invention each device which is capable of sending data on isochronous channels can start broadcasting such data in the preferred data format soon after start up. From a technical point of view such broadcasting can be called "unsolicited" as unlike in conventional networks, no direct or indirect user command is required to initiate isochronous data transfer. These devices can also continue broadcasting after basic connections have been established. If necessary, to avoid wasting bandwidth, video data with a high degree of temporal and spatial redundancy can be used for this purpose. In case of e. g. MPEG2 transport streams, such video data can be compressed efficiently to very low bit rates. If such a signal is not available at the input of the broadcasting device, in other words, if there is no bit rate signal available which can be forwarded to the IEEE 1394 isochronous channel, it could be generated with hardware or software in the device. Preferrably, this initial isochronous data will also provide information for the user to help understand the type and state of the device.

Existing IEEE 1394 devices, i. e. legacy devices, do not support the capability to generate such a low bit rate stream internally. However, according to the invention, new devices can instruct these legacy devices to start broadcasting data, albeit at conventional bit rates, on isochronous channels soon after start up. In case of tuners, this effectively means forwarding cable or satelite bit streams to the home network. Storage media devices with tuners, e. g. VCR's, could also forward broadcasting services to avoid mechanical operations. In case where it is not desireable that legacy devices behave this way, e. g. because of bandwidth, power consumption or other limitations, the system can inform the user that these devices should be programmed first.

## Claims

1. A method for establishing first connections between remote devices (1; 1A, 1B, 1C) **characterized by** independently controlling said remote devices (1; 1A, 1B, 1C) using a hypertext transfer protocol, wherein second connections used for controlling said remote devices are operated independently from said first connections.

2. The method according to claim 1, **characterized in that** said remote devices (1; 1A, 1B, 1C) are controlled via a control device (2), which controls said remote devices (1; 1A, 1B, 1C) by using a hypertext transfer protocol.

3. The method according to claim 2, **characterized by** remotely controlling said control device (2) by using a hypertext transfer protocol.

4. The method according to claim 2, **characterized by** directly controlling said control device (2) via a user interface (8).

5. The method according to anyone of claims 2 to 4, **characterized in that** said control device (2) respectively downloads a user interface from each of said remote devices (1; 1A, 1B, 1C) which is to be connected with said first connection and offers said user interfaces or a modified user interface based on said user interfaces to a user who wishes to control said remote devices (1; 1A, 1B, 1C).

6. The method according to claim 4 or 5, **characterized in that** a graphical user interface is used as said user interface.

7. The method according to anyone of claims 1 to 6, **characterized in that** said first connection between said remote devices (1; 1A, 1B, 1C) is a guaranteed bandwitdh connection.

8. The method according to anyone of claims 1 to 7, **characterized in that** said first connection between said remote devices (1; 1A, 1B, 1C) is established via an IEEE 1394 bus system (5).

9. The method according to anyone of claims 2 to 8, **characterized in that** a fully qualified domain name is assigned to each of said remote devices (1; 1A, 1B, 1C) in an initialization step that respectively consists of a name of a respective remote device (1; 1A, 1B, 1C) prepended to a name of said controller (2).

10. The method according to anyone of claims 2 to 9, **characterized in that** said name of said controller is a domain name which is assigned by an Internet access provider.

11. The method according to claim 9 or 10, **characterized in that** said fully qualified domain name is copied to the path of each hypertext transfer protocol command of each universal resource locator used to control said remote devices (1; 1A, 1B, 1C).

12. The method according to anyone of claims 1 to 11, **characterized in that** a hyperlink to all connected remote devices (1; 1A, 1B, 1C) is assigned to each of said remote devices (1; 1A, 1B, 1C) in an initialization step.

13. A remote device (1; 1A, 1B,1C) capable of establishing a first connection to other remote devices (1; 1A, 1B, 1C), **characterized by** a control interface (3) via which said remote device (1; 1A, 1B, 1C) is controllable over a second connection using a hypertext transfer protocol, wherein said second connection is usable for remotely initiating the establishing of said first connection, and wherein said remote device (1; 1A, 1B, 1C) is adapted to independently operate said first and said second connection.

14. The remote device (1; 1A, 1B, 1C) according to claim 13, **characterized in that** said control interface (3) is a hypertext transfer protocol server and stores a user interface to be downloaded by said remote device (1; 1A, 1B, 1C) to a control device (2).

15. The remote device (1; 1A, 1B, 1C) according to claim 14, **characterized in that** said user interface is a graphical user interface.

16. The remote device (1; 1A, 1B, 1C) according to anyone of claims 13 to 15, **characterized in that** said first connection is a guaranteed bandwitdh connection.

17. The remote device (1; 1A, 1B, 1C) according to anyone of claims 13 to 16, **characterized by** a data interface (4) via which said first connection is established.

18. The remote device (1; 1A, 1B, 1C) according to claim 17, **characterized in that** said remote device (1; 1A, 1B, 1C) starts forwarding or generating at least one service via said data interface (4) automatically after being switched-on.

19. The remote device (1; 1A, 1B, 1C) according to claim 17 or 18, **characterized in that** said data interface (4) is an IEEE 1394 interface for isochronous connections.

20. The remote device (1; 1A, 1B, 1C) according to anyone of claims 14 to 19, **characterized in that** it includes a domain name server that assigns a fully qualified domain name to each of said remote devices (1; 1A, 1B. 1C) in an automatic initialization step that respectively consists of a name of a respective remote device (1; 1A, 1B, 1C) prepended to a name of said control device (2) which could be assigned by an Internet access provider.

21. The remote device (1; 1A, 1B, 1C) according to anyone of claims 13 to 20, **characterized in that** it includes a unit to poll all other connected remote devices (1; 1A, 1B, 1C) to generate a hyperlink to all other connected remote devices (1; 1A, 1B, 1C).

22. The remote device (1; 1A, 1B, 1C) according to anyone of claims 13 to 20, **characterized in that** it includes a unit to snoop the traffic on the connections to and inbetween the connected remote devices (1; 1A, 1B, 1C) to generate a hyperlink to all other connected remote devices (1; 1A, 1B, 1C).

23. A control device (2) with a first interface (2a) for controlling remote devices (1; 1A, 1B, 1C) by use of a hypertext transfer protocol **characterized by** a second interface (2b) for controlling said control device (2) using a hypertext transfer protocol for establishing a connection between at least two of said remote devices (1; 1A, 1B, 1C).

24. The control device (2) according to claim 23, **characterized by** means for downloading at least one user interface from said remote devices (1; 1A, 1B, 1C) connected thereto via said first interface (2a) and for offering at least one of said user interfaces at a time to a user so as to establish a connection between at least two of said remote devices (1; 1A, 1B, 1C).

25. The control device (2) according to claim 23 or 24, **characterized in that** said connection is a guaranteed bandwitdh connection.

26. The control device (2) according to anyone of claims 23 to 25, **characterized in that** said user interface is a graphical user interface.

27. The control device (2) according to anyone of claims 23 to 26, **characterized in that** it is integrated into a standard personal computer.

28. The control device (2) according to anyone of claims 23 to 27, **characterized in that** it includes a domain name server that assigns a fully qualified domain name to each of said remote devices (1; 1A, 1B, 1C) in an initialization step that respectively consists of a name of a respective remote device (1; 1A, 1B, 1C) prepended to a name of said control device (2) which could be assigned by an Internet access provider.

## Patentansprüche

1. Verfahren zur Herstellung erster Verbindungen zwischen entfernten Einheiten (1; 1A, 1B, 1C) **gekennzeichnet durch** unabhängiges Steuern der entfernten Einheiten (1; 1A, 1B, 1C) unter Verwendung eines Hypertext-Übertragungsprotokolls, wobei zweite Verbindungen, die zum Steuern der entfernten Einheiten verwendet werden, unabhängig von den ersten Verbindungen betrieben werden.

2. Verfahren nach Anspruch 1, **dadurch gekennzeichnet, dass** die entfernten Einheiten (1; 1A. 1B, 1C) über eine Steuereinrichtung (2) gesteuert werden, die die entfernten Einrichtungen (1; 1A, 1B, 1C) unter Verwendung eines Hypertext-Übertragungsprotokolls steuert.

3. Verfahren nach Anspruch 2, **gekennzeichnet durch** entferntes Steuern der Steuereinrichtung (2) unter Verwendung eines Hypertext-Übertragungsprotokolls.

4. Verfahren nach Anspruch 2, **gekennzeichnet durch** direktes Steuern der Steuereinrichtung (2) über eine Benutzerschnittstelle (8).

5. Verfahren nach einem der Ansprüche 2 bis 4, **dadurch gekennzeichnet, dass** die Steuereinrichtung (2) respektive eine Benutzerschnittstelle von jeder der entfernten Einheiten (1; 1A, 1B, 1C), die mit der ersten Verbindung verbunden sind, herunter lädt, und die Benutzerschnittstellen oder eine modifizierte Benutzerschnittstelle auf der Grundlage der Benutzerschnittstellen einem Benutzer anbietet, der die entfernten Einheiten (1; 1A, 1B, 1C) zu steuern wünscht.

6. Verfahren nach Anspruch 4 oder 5, **dadurch gekennzeichnet, dass** eine graphische Benutzerschnittstelle als Benutzerschnittstelle verwendet wird.

7. Verfahren nach einem der Ansprüche 1 bis 6, **dadurch gekennzeichnet, dass** die erste Verbindung zwischen den entfernten Einheiten (1; 1A, 1B, 1C) eine Verbindung mit garantierter Bandbreite ist.

8. Verfahren nach einem der Ansprüche 1 bis 7, **dadurch gekennzeichnet, dass** die erste Verbindung zwischen den entfernten Einheiten (1; 1A, 1B. 1C) über ein IEEE-1394-Bussystem (5) aufgebaut wird.

9. Verfahren nach einem der Ansprüche 2 bis 8, **dadurch gekennzeichnet, dass** ein voll qualifizierter Domainname jeder der entfernten Einheiten (1; 1A, 1B, 1C) in einem Initialisierungsschritt zugeordnet wird, der respektive aus einem Namen aus einer respektiven entfernten Einheit (1; 1A, 1B, 1C) besteht, dem ein Namen der Steuereinrichtung (2) vorangestellt wird.

10. Verfahren nach einem der Ansprüche 2 bis 9, **dadurch gekennzeichnet, dass** der Name der Steuereinrichtung ein Domainname ist, der von einem Internet-Zugangsprovider zugewiesen wird.

11. Verfahren nach Anspruch 9 oder 10, **dadurch gekennzeichnet, dass** der voll qualifizierte Domainname auf den Pfad von jedem Hypertext-Übertragungsprotokollbefehl von jedem universellem Resourcenfinder kopiert wird, um die entfernten Einheiten (1; 1A, 1B, 1C) zu steuern.

12. Verfahren nach einem der Ansprüche 1 bis 11, **dadurch gekennzeichnet, dass** eine Hyper-Verknüpfung (Hyperlink) zu allen angeschlossenen entfernten Einheiten (1; 1A, 1B, 1C) jeder der entfernten Einheiten (1; 1A, 1B, 1C) in einem Initialisierungsschritt zugeordnet wird.

13. Entfernte Einheit (1; 1A, 1B, 1C), die in der Lage ist, eine erste Verbindung mit anderen entfernten Einheiten (1; 1A, 1B, 1C) aufzubauen, **gekennzeichnet durch** eine Steuerschnittstelle (3), über die die entfernte Einheit (1; 1A, 1B, 1C) über eine zweite Verbindung unter Verwendung eines Hypertext-Übertragungsprotokolls steuerbar ist, wobei die zweite Verbindung verwendbar ist, um den Aufbau der ersten Verbindung aus Entfernung einzuleiten, und wobei die entfernte Einheit (1; 1A, 1B, 1C) in der Lage ist, die erste und die zweite Verbindung unabhängig zu betreiben.

14. Entfernte Einheit (1; 1A, 1B, 1C) nach Anspruch 13, **dadurch gekennzeichnet, dass** die Steuerschnittstelle (3) ein Hypertext-Übertragungsprotokollserver ist und eine Benutzerschnittstelle speichert, die von der entfernten Einheit (1; 1A, 1B, 1C) auf eine Steuereinrichtung (2) herunter zu laden ist.

15. Entfernte Einheit (1; 1A. 1B, 1C) nach Anspruch 14, **dadurch gekennzeichnet, dass** die Benutzerschnittstelle eine graphische Benutzerschnittstelle ist.

16. Entfernte Einheit (1; 1A, 1B, 1C) nach einem der Ansprüche 13 bis 15, **dadurch gekennzeichnet, dass** die erste Verbindung eine Verbindung mit garantierter Bandbreite ist.

17. Entfernte Einheit (1; 1A, 1B, 1C) nach einem der Ansprüche 13 bis 16 **gekennzeichnet durch** eine Datenschnittstelle (4), über die die erste Verbindung aufgebaut wird.

18. Entfernte Einheit (1; 1A, 1B, 1C) nach Anspruch 17, **dadurch gekennzeichnet, dass** die entfernte Einheit (1; 1A, 1B, 1C) damit beginnt, wenigstens eine Dienstleistung über die Datenschnittstelle (4) automatisch weiter zu geben oder zu erzeugen, nachdem sie eingeschaltet worden ist.

19. Entfernte Einheit (1; 1A, 1B, 1C) nach Anspruch 17 oder 18, **dadurch gekennzeichnet, dass** die Datenschnittstelle (4) eine IEEE-1394-Schnittstelle für isochrone Verbindungen ist.

20. Entfernte Einheit (1; 1A, 1B, 1C) nach einem der Ansprüche 14 bis 19, **dadurch gekennzeichnet, dass** sie einen Domainnamenserver umfasst, der einen voll qualifizierten Domainnamen jeder der entfernten Einheiten (1; 1A, 1B, 1C) in einem automatischen Initialisierungsschritt zuordnet, der respektive aus einem Namen einer respektiven entfernten Einheit (1; 1A, 1B, 1C) besteht, dem ein Namen der Steuereinrichtung (2) vorangestellt ist, die durch einen Internet-Zugangsprovider zugeordnet werden könnte.

21. Entfernte Einheit (1; 1A, 1B, 1C) nach einem der Ansprüche 13 bis 20, **dadurch gekennzeichnet, dass** sie eine Einheit umfasst, um alle anderen angeschlossenen entfernten Einheiten (1; 1A, 1B, 1C) abzufragen, um eine Hyperverbindung mit allen anderen angeschlossenen entfernten Einheiten (1; 1A, 1B, 1C) zu erzeugen.

22. Entfernte Einheit (1; 1A, 1B, 1C) nach einem der Ansprüche 13 bis 20, **dadurch gekennzeichnet, dass** sie eine Einheit umfasst, um den Verkehr auf den Verbindungen zu und zwischen den angeschlossenen entfernten Einheiten (1; 1A, 1B, 1C) zu überwachen, um eine Hyperverbindung mit allen anderen angeschlossenen entfernten Einheiten (1; 1A, 1B, 1C) zu erzeugen.

23. Steuereinrichtung (2) mit einer ersten Schnittstelle (2a) zum Steuern entfernter Einheiten (1; 1A, 1B, 1C) unter Verwendung eines Hypertext-Übertragungsprotokolls, **gekennzeichnet durch** eine zweite Schnittstelle (2b) zum Steuern der Steuereinrichtung (2) unter Verwendung eines Hypertext-Übertragungsprotokolls, um eine Verbindung zwischen wenigstens zwei der entfernten Einheiten (1; 1A, 1B, 1C) aufzubauen.

24. Steuereinrichtung (2) nach Anspruch 23, **gekennzeichnet durch** Mittel zum Herunterladen von wenigstens einer Benutzerschnittstelle von den entfernten Einheiten (1; 1A, 1B, 1C), die daran über die erste Schnittstelle (2a) angeschlossen sind, und zum Anbieten von wenigstens einer der Benutzerschnittstellen an einem Zeitpunkt an einen Benutzer, um eine Verbindung zwischen wenigstens zwei der entfernten Einheiten (1; 1A, 1B, 1C) aufzubauen.

25. Steuereinrichtung (2) nach Anspruch 23 oder 24, **dadurch gekennzeichnet, dass** die Verbindung eine Verbindung mit garantierter Bandbreite ist.

26. Steuereinrichtung (2) nach einem der Ansprüche 23 bis 25, **dadurch gekennzeichnet, dass** die Benutzerschnittstelle eine graphische Benutzerschnittstelle ist.

27. Steuereinrichtung (2) nach einem der Ansprüche 23 bis 26, **dadurch gekennzeichnet, dass** sie in einen Standard-Personalcomputer integriert ist.

28. Steuereinrichtung (2) nach einem der Ansprüche 23 bis 27, **dadurch gekennzeichnet, dass** sie einen Domainnamenserver umfasst, der einen voll qualifizierten Domainnamen jeder der entfernten Einheiten (1; 1A, 1B, 1C) in einem Initialisierungsschritt zuordnet, der respektive aus einem Namen einer respektiven entfernten Einheit (1; 1A, 1B, 1C) besteht, die einem Namen der Steuereinrichtung (2) vorangestellt ist, der durch einen Internet-Zugriffsprovider zugeordnet werden könnte.

## Revendications

1. Procédé permettant d'établir des premières connexions entre des dispositifs à distance (1 ; 1A, 1B, 1C) **caractérisé par** la commande indépendante desdits dispositifs à distance (1 ; 1A, 1B, 1C) à l'aide d'un protocole de transfert hypertexte, dans lequel des secondes connexions utilisées pour commander lesdits dispositifs à distance sont actionnées indépendamment desdites premières connexions.

2. Procédé selon la revendication 1, **caractérisé en ce que** lesdits dispositifs à distance (1 ; 1A, 1B, 1C) sont commandés par le biais d'un dispositif de commande (2), qui commande lesdits dispositifs à distance (1 ; 1A, 1B, 1C) à l'aide d'un protocole de transfert hypertexte.

3. Procédé selon la revendication 2, **caractérisé par** la commande à distance dudit dispositif de commande (2) à l'aide d'un protocole de transfert hypertexte.

4. Procédé selon la revendication 2, **caractérisé par** la commande directe dudit dispositif de commande (2) par le biais d'une interface utilisateur (8).

5. Procédé selon l'une quelconque des revendications 2 à 4, **caractérisé en ce que** ledit dispositif de commande (2) télécharge respectivement une interface utilisateur de chacun desdits dispositifs à distance (1 ; 1A, 1B, 1C) qui doivent être connectés avec ladite première connexion et offre lesdites interfaces utilisateur ou une interface utilisateur modifiée en fonction desdites interfaces utilisateur à un utilisateur qui souhaite commander lesdits dispositifs à distance (1 ; 1A, 1B, 1C).

6. Procédé selon la revendication 4 ou 5, **caractérisé en ce qu'**une interface utilisateur graphique est utilisée comme ladite interface utilisateur.

7. Procédé selon l'une quelconque des revendications 1 à 6, **caractérisé en ce que** ladite première connexion entre lesdits dispositifs à distance (1 ; 1A, 1B, 1C) est une connexion à bande passante garantie.

8. Procédé selon l'une quelconque des revendications 1 à 7, **caractérisé en ce que** ladite première connexion entre lesdits dispositifs à distance (1 ; 1A, 1B, 1C) est établie par le biais d'un système de bus IEEE 1394 (5).

9. Procédé selon l'une quelconque des revendications 2 à 8, **caractérisé en ce qu'**un nom de domaine complet est attribué à chacun desdits dispositifs à distance (1 ; 1A, 1B, 1C) dans une étape d'initialisation qui consiste respectivement en un nom d'un dispositif à distance respectif (1 ; 1A, 1B, 1C) préfixé à un nom dudit dispositif de commande (2).

10. Procédé selon l'une quelconque des revendications 2 à 9, **caractérisé en ce que** ledit nom dudit dispositif de commande est un nom de domaine qui est attribué par un fournisseur d'accès Internet.

11. Procédé selon la revendication 9 ou 10, **caractérisé en ce que** ledit nom de domaine complet est copié sur le chemin de chaque commande de protocole de transfert hypertexte de chaque adresse URL utilisée pour commander lesdits dispositifs à distance (1 ; 1A, 1B, 1C).

12. Procédé selon l'une quelconque des revendications 1 à 11, **caractérisé en ce qu'**un lien hypertexte pour tous les dispositifs à distance connectés (1 ; 1A, 1B, 1C) est attribué à chacun desdits dispositifs à distance (1 ; 1A, 1B, 1C) dans une étape d'initialisation.

13. Dispositif à distance (1; 1A, 1B, 1C) capable d'établir une première connexion avec d'autres dispositifs à distance (1 ; 1A, 1B, 1C), **caractérisé par** une interface de commande (3) par le biais de laquelle ledit dispositif à distance (1 ; 1A, 1B, 1C) peut être commandé sur une seconde connexion à l'aide d'un protocole de transfert hypertexte, dans lequel ladite seconde connexion peut être utilisée pour initier à distance l'établissement de ladite première connexion, et dans lequel ledit dispositif à distance (1 ; 1A, 1B, 1C) est conçu pour actionner indépendamment lesdites première et seconde connexions.

14. Dispositif à distance (1 ; 1A, 1B, 1C) selon la revendication 13, **caractérisé en ce que** ladite interface de commande (3) est un serveur de protocole de transfert hypertexte et stocke une interface utilisateur devant être téléchargée par ledit dispositif à distance (1 ; 1A, 1B, 1C) sur un dispositif de commande (2).

15. Dispositif à distance (1 ; 1A, 1B, 1C) selon la revendication 14, **caractérisé en ce que** ladite interface utilisateur est une interface utilisateur graphique.

16. Dispositif à distance (1 ; 1A, 1B, 1C) selon l'une quelconque des revendications 13 à 15, **caractérisé en ce que** ladite première connexion est une connexion à bande passante garantie.

17. Dispositif à distance (1 ; 1A, 1B, 1C) selon l'une quelconque des revendications 13 à 16, **caractérisé par** une interface de données (4) par le biais de laquelle ladite première connexion est établie.

18. Dispositif à distance (1 ; 1A, 1B, 1C) selon la revendication 17, **caractérisé en ce que** ledit dispositif à distance (1 ; 1A, 1B, 1C) commence à transférer ou à générer au moins un service par le biais de ladite interface de données (4) automatiquement après avoir été mis sous tension.

19. Dispositif à distance (1 ; 1A, 1B, 1C) selon la revendication 17 ou 18, **caractérisé en ce que** ladite interface de données (4) est une interface IEEE 1394 destinée à des connexions isochrones.

20. Dispositif à distance (1 ; 1A, 1B, 1C) selon l'une quelconque des revendications 14 à 19, **caractérisé en ce qu'**il comprend un serveur de nom de domaine qui attribue un nom de domaine complet à chacun desdits dispositifs à distance (1 ; 1A, 1B, 1C) dans une étape d'initialisation automatique qui consiste respectivement en un nom d'un dispositif à distance respectif (1 ; 1A, 1B, 1C) préfixé à un nom dudit dispositif de commande (2) qui pourrait être attribué par un fournisseur d'accès Internet.

21. Dispositif à distance (1 ; 1A, 1B, 1C) selon l'une quelconque des revendications 13 à 20, **caractérisé en ce qu'**il comprend une unité destinée à interroger tous les autres dispositifs à distance connectés (1 ; 1A, 1B, 1C) afin de générer un lien hypertexte pour tous les autres dispositifs à distance connectés (1 ; 1A, 1B, 1C).

22. Dispositif à distance (1 ; 1A, 1B, 1C) selon l'une quelconque des revendications 13 à 20, **caractérisé en ce qu'**il comprend une unité destinée à surveiller le trafic sur les connexions vers et entre les dispositifs à distance connectés (1 ; 1A, 1B, 1C) afin de générer un lien hypertexte pour tous les autres dispositifs à distance connectés (1 ; 1A, 1B, 1C).

23. Dispositif de commande (2) comportant une première interface (2a) destinée à commander des dispositifs à distance (1 ; 1A, 1B, 1C) à l'aide d'un protocole de transfert hypertexte **caractérisé par** une seconde interface (2b) destinée à commander ledit dispositif de commande (2) à l'aide d'un protocole de transfert hypertexte afin d'établir une connexion entre au moins deux desdits dispositifs à distance (1 ; 1A, 1B, 1C).

24. Dispositif de commande (2) selon la revendication 23, **caractérisé par** des moyens destinés à télécharger au moins une interface utilisateur desdits dispositifs à distance (1 ; 1A, 1B, 1C) connectés à celle-ci par le biais de ladite première interface (2a) et à offrir au moins une desdites interfaces utilisateur à la fois à un utilisateur de manière à établir une connexion entre au moins deux desdits dispositifs à distance (1 ; 1A, 1B, 1C).

25. Dispositif de commande (2) selon la revendication 23 ou 24, **caractérisé en ce que** ladite connexion est une connexion à bande passante garantie.

26. Dispositif de commande (2) selon l'une quelconque des revendications 23 à 25, **caractérisé en ce que** ladite interface utilisateur est une interface utilisateur graphique.

27. Dispositif de commande (2) selon l'une quelconque des revendications 23 à 26, **caractérisé en ce qu'**il est intégré dans un ordinateur personnel standard.

28. Dispositif de commande (2) selon l'une quelconque des revendications 23 à 27, **caractérisé en ce qu'**il comprend un serveur de nom de domaine qui attribue un nom de domaine complet à chacun desdits dispositifs à distance (1 ; 1A, 1B, 1C) dans une étape d'initialisation qui consiste respectivement en un nom d'un dispositif à distance respectif (1 ; 1A, 1B, 1C) préfixé à un nom dudit dispositif de commande (2) qui pourrait être attribué par un fournisseur d'accès Internet.
